# EUROPEAN PATENT APPLICATION

(11) **EP 4 596 313 A1**
(43) Date of publication of application: **06.08.2025**
(21) Application number: 25155283.2
(22) Date of filing: 31.01.2025
(51) Int. Cl.: B60N 2/26, B60N 2/28, B60R 21/015

(54) **CHILD RESTRAINT WITH HARNESS RETAINER**

(30) Priority: 01.02.2024 US 202463627978 P
(71) Applicant: Dorel Juvenile Group, Inc., Foxborough MA 02035 (US)
(72) Inventor: NAKHLA, Said S., Daphne (US); MASON, Grant M., Wrentham (US); SORENSEN, Abigail, Foxboro (US)
(74) Representative: Veldman-Dijkers, Cornelia G. C.

(57) **Abstract**

A child restraint includes a seat shell formed to include a child-receiving space configured to receive a child therein. The child restraint includes a child harness coupled to the seat shell and including a first harness strap and a second harness strap configured to secure the child to the seat shell within the child-receiving space. The child restraint includes a harness retainer coupled to the first harness strap and the second harness strap and configured to guide attachment of the child harness to the child to block separation of the child harness from the child.

## Description

### PRIORITY CLAIM

This application claims priority under 35 U.S.C. § 119(e) to U.S. Provisional Application Serial No. 63/627,978, filed February 1, 2024, which is expressly incorporated by reference herein.

### BACKGROUND

The present disclosure relates to a child seat, and particularly to a child car seat. More particularly, the present disclosure relates to a child car seat including a harness system.

### SUMMARY

According to the present disclosure, a child restraint includes a seat shell formed to include a child-receiving space configured to receive a child therein, and a child harness coupled to the seat shell and configured to secure the child to the seat shell within the child-receiving space. The harness may include a first harness strap and a second harness strap movable relative to the seat shell between a loosened state to ais in attaching the harness to the child and a tightened state restraining movement of the child relative to the seat shell.

In illustrative embodiments, the child restraint further includes a harness retainer coupled to the first harness strap and the second harness strap and configured to guide attachment of the child harness to the child to block separation of the child harness from the child. The harness retainer may include a first belt mount coupled to the first harness strap, a second belt mount coupled to the second harness strap, and an indicator coupled to the first belt mount. The first and second belt mounts are configured to engage selectively with one another to block movement of at least a portion of the first strap away from the second strap. The indicator is configured to produce one or more indications indicative of an installation state of the harness and/or the harness retainer.

In illustrative embodiments, the indicator is configured to produce a first indication in an unloaded configuration when a force acting on the harness retainer is less than a predetermined amount and a second indication in a loaded configuration when the force acting on the harness retainer is at or greater than the predetermined amount. In some embodiments, the indicator may produce the first indication when the belt mounts are unlocked and the second indication when the belt mounts are locked together. The indications may be seen, felt, or heard by a user.

Additional features of the present disclosure will become apparent to those skilled in the art upon consideration of illustrative embodiments exemplifying the best mode of carrying out the disclosure as presently perceived.

### BRIEF DESCRIPTIONS OF THE DRAWINGS

The detailed description particularly refers to the accompanying figures in which:

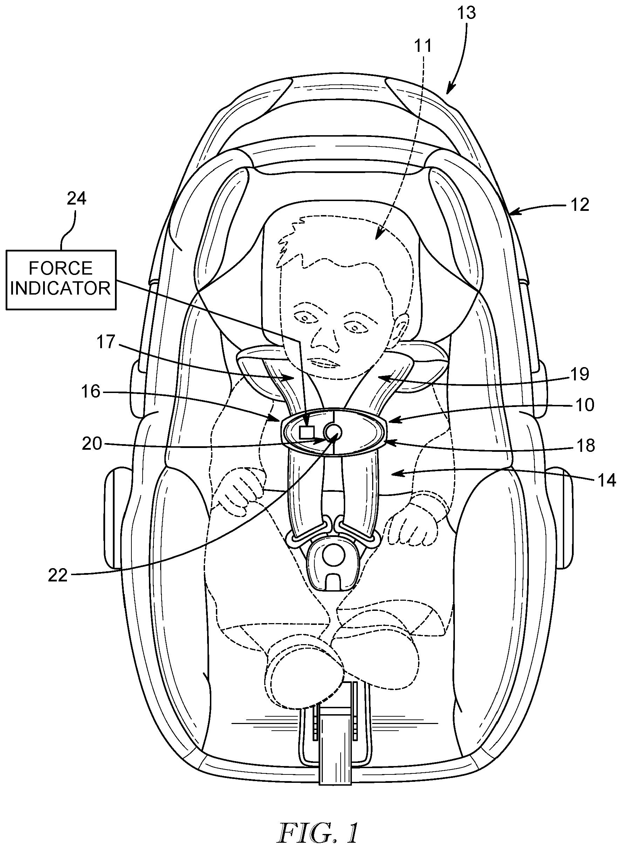

Fig. 1 is a front perspective view of a child restraint, in accordance with the present disclosure, including a seat shell formed to include a child-receiving space configured to hold a child, a harness coupled to the seat shell and configured to secure the child in the child-receiving space, and a harness retainer coupled to the harness to restrain the harness to the child;

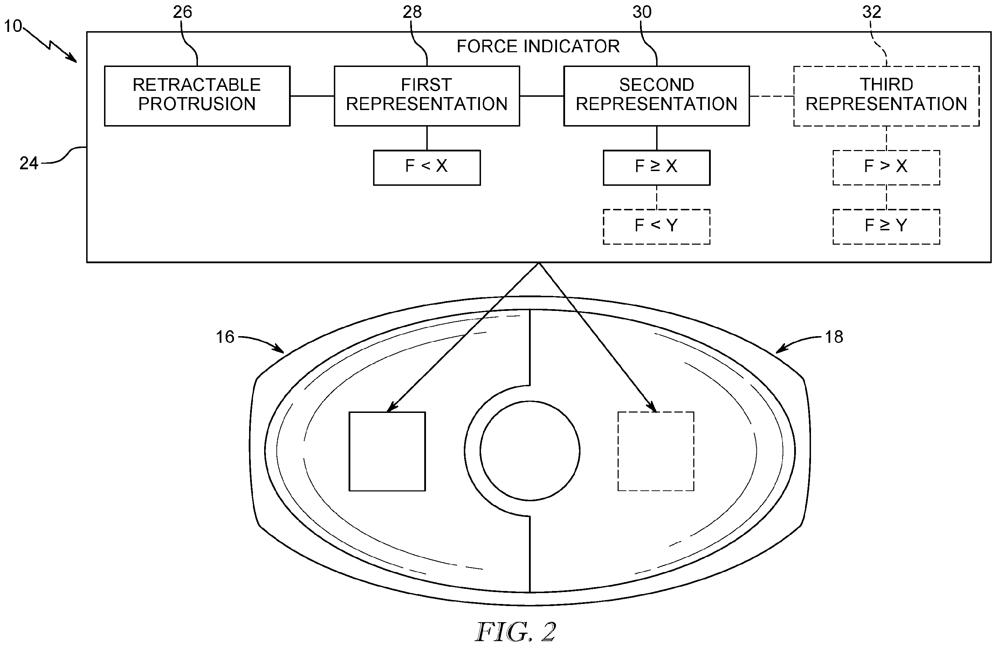

Fig. 2 is a front view and diagrammatic view of the harness retainer including a first belt mount configured to engage with a first harness strap included in the harness, a second belt mount configured to engage with a second harness strap included in the harness, and an installation-status indicator coupled to at least one of the first belt mount and the second belt mount and configured to provide a plurality of indications representative of an installation status of the harness retainer and/or the harness;

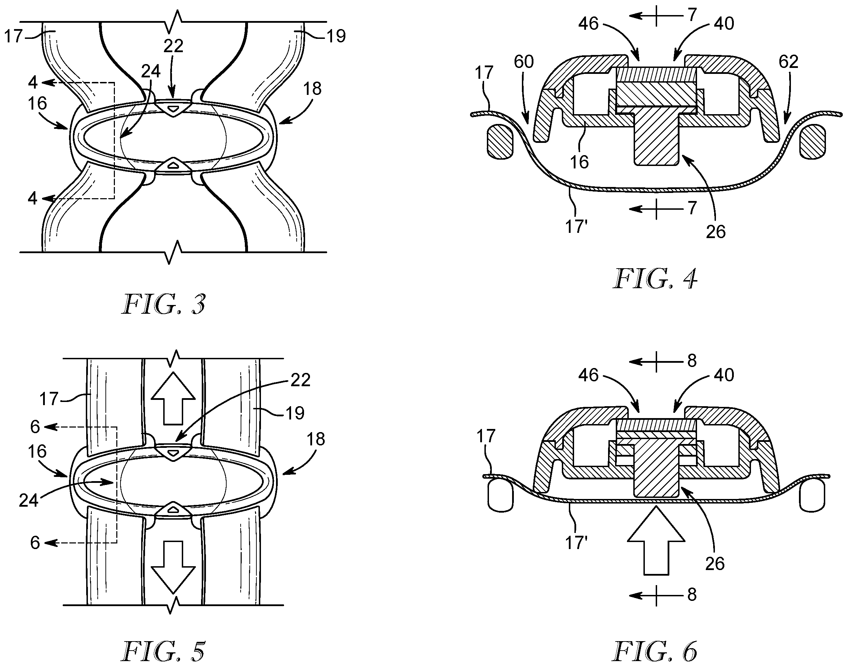

Fig. 3 is a front view of the harness retainer and a portion of the harness including a first shoulder strap coupled to the first belt mount and a second shoulder strap coupled to the second belt mount, and showing the first and second shoulder straps in a loose state prior to tightening the harness around the child and the indicator included in the harness retainer producing a first indication to indicate that the harness is in the loose state;
Fig. 4 is a cross section taken along line 4-4 in Fig. 3 showing one of the shoulder straps in the loose state and the indicator including an indicator panel configured to display the first indication through an opening formed in the first belt mount and a retractable protrusion extending away from the indicator panel and toward the shoulder strap in an unloaded position when a force acting on the retractable protrusion is below a predetermined amount;
Fig. 5 is a front view of the harness retainer and a portion of the harness showing the first and second shoulder straps in a tight state securing a child to the child restraint and the indicator included in the harness retainer producing a second indication to indicate that the harness is in the tight state;
Fig. 6 is a cross section taken along line 6-6 in Fig. 5 showing one of the shoulder straps in the tight state and the retractable protrusion at least partially withdrawn into an interior space of the belt mount in a loaded position when the force acting on the retractable protrusion reaches the predetermined amount to cause the indicator panel to display the second indication through the opening formed in the first belt mount and indicate to users that the harness is tight;

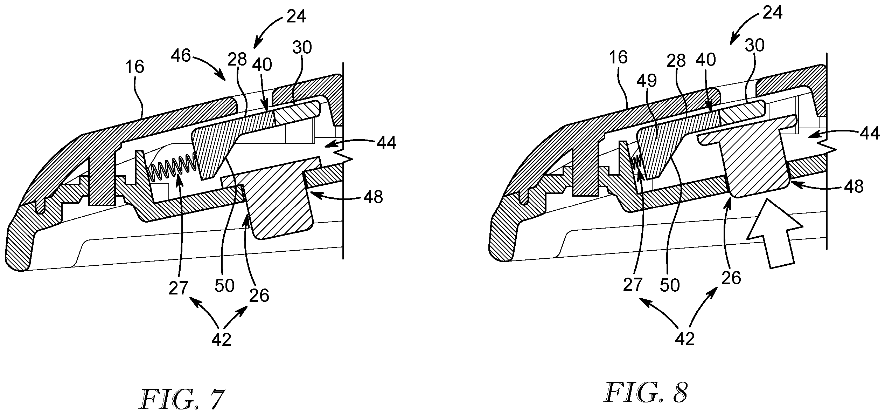

Fig. 7 is a cross section taken along line 7-7 in Fig. 4 showing the retractable protrusion in the unloaded position and a bias member urging the indicator panel toward a first indication position where the first indication is aligned with and displayed through the opening formed in the belt mount to indicate to users that the harness is loose;
Fig. 8 is a cross section taken along line 8-8 in Fig. 6 showing the retractable protrusion in the loaded position after having engaged with a ramped surface coupled to the indicator panel to cause translation of the indicator panel relative to the opening formed in the belt mount to a second indication position in which the second indication is aligned with and displayed through the opening to indicate to users that the harness is tight;

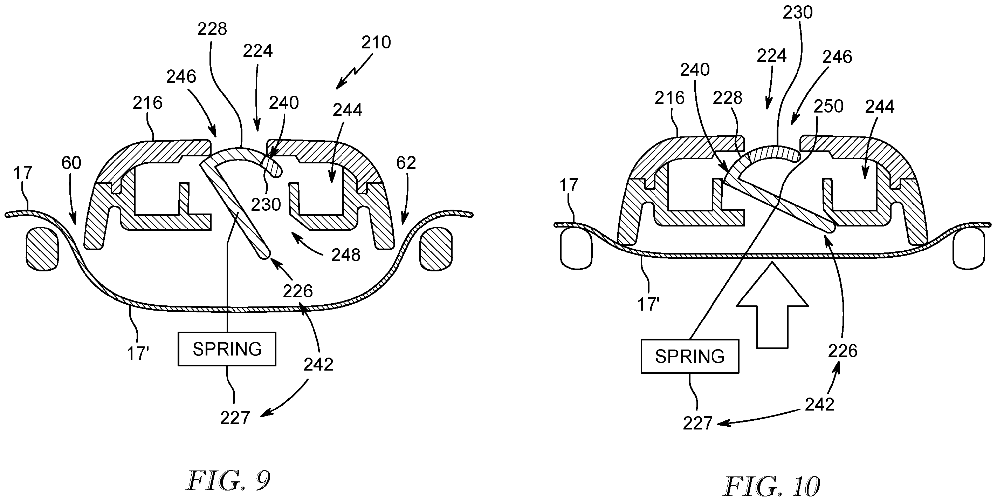

Fig. 9 is a cross section of another embodiment of an indicator that can be used with the harness retainer, the indicator including an indicator panel having the first indication and the second indication and a retractable protrusion formed integrally with the indicator panel, and showing the retractable protrusion in an unloaded position extending out of an interior space of the belt mount while the harness is loose to display the first indication through the opening formed in the belt mount;
Fig. 10 is a cross section of the indicator of Fig. 9 showing the retractable protrusion in a loaded position at least partially withdrawn into the interior space of the belt mount after the indicator panel and the retractable protrusion have pivoted in unison about a pivot axis to align the second indication with the opening formed in the belt mount to indicate that the harness is tight; and

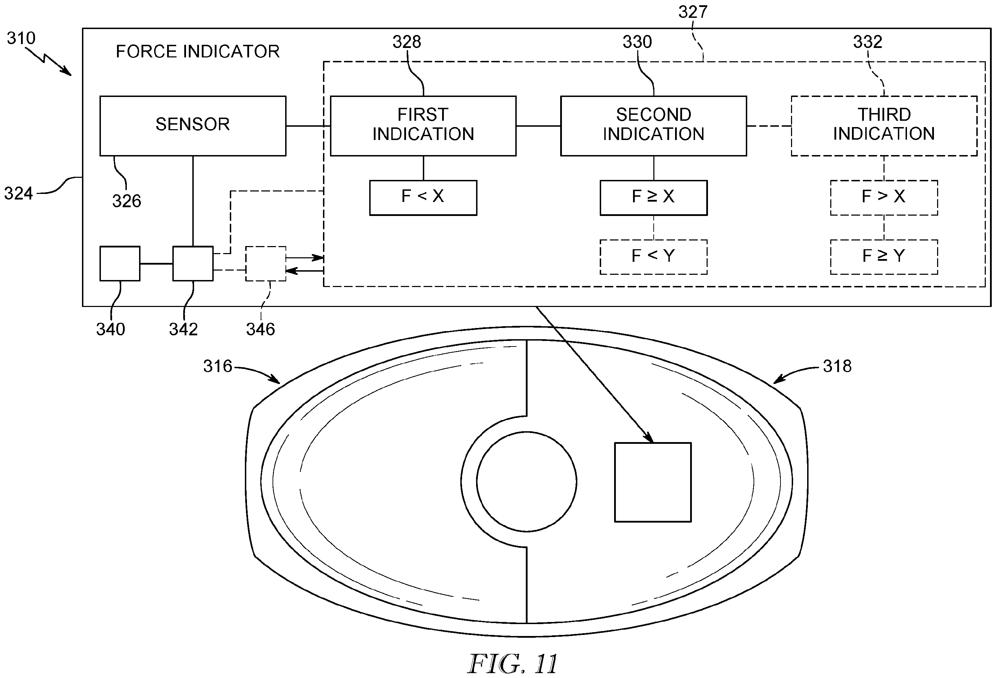

Fig. 11 is a front view and diagrammatic view of a third embodiment of a harness retainer including electrical components configured to sense forces acting on the harness and/or the harness retainer and produce indications in response to the forces to indicate one or more installation states of the harness and/or the harness retainer.

### DETAILED DESCRIPTION

A harness retainer 10 in accordance with the present disclosure is shown in Fig. 1. The harness retainer 10 is used with a child restraint 12 to guide a harness 14 included in the child restraint 12 along the chest of a child 11 seated in the child restraint 12 to block child 11 from exiting the child restraint 12 as shown in Fig. 1. The harness retainer 10 includes a left belt mount 16 coupled to a left harness belt 17 (also called harness strap 17) included in the harness 14 and a right belt mount 18 coupled to a right harness belt 19 (also called harness strap 19) included in the harness 14 as shown in Fig. 1. The harness retainer 10 also includes a lock 20 that provides means for releasing left belt mount 16 from right belt mount 18 in response to a user actuating a lock release 22 (i.e. one or more buttons) included in the lock 20 to unlock the harness retainer 10 so that the left belt mount 16 may be moved away from the right belt mount 18 to allow the child 11 to exit the child restraint 12.

In illustrative embodiments, the harness retainer 10 further includes an indicator 24 configured to change appearance (or produce another sensory effect) in response to one or more conditions or configurations of the harness retainer 10 or the harness 14 to indicate a status of the harness 14 and/or the harness retainer 10 to a user as shown in Figs. 1 and 2. The indicator 24 is configured to indicate when a force F acting on the harness retainer 10 and/or the child 11 is above a predetermined amount X and/or within a predetermined range (i.e., X ≤ F ≤ Y). The force acting on the harness retainer 10 may be representative of a tightness, or tensile load, of the left and right harness belts 17, 19, and hence, a tightness of the harness 14 on the child 11. Accordingly, the indicator 24 is configured to provide means for indicating to a user when the harness 14 is fitted to the child 11 with proper tightness level which is determined by the force acting on the harness retainer 10.

For example, when the left and right harness belts 17, 19 are tightened on the child 11, the harness retainer 10 may contact and exert a force (i.e. pressure) on the child 11, and the indicator 24 can change appearance to indicate when this force reaches the predetermined amount. In some embodiments, the indicator 24 can change appearance when a tensile force in the left and/or right harness belts 17, 19 reaches a predetermined amount. In some embodiments, both the pressure on the child 11 and the tensile force in the left and right harness belts 17, 19 can be variables used to determine when the indicator 24 changes appearance.

The indicator 24 illustratively includes one or more retractable protrusions 26 coupled with at least one of the left belt mount 16 and the right belt mount 18 and first and second visual representations 28, 30 coupled to the retractable protrusion 26. The retractable protrusion(s) 26 is configured to move relative to the left and right belt mounts 16, 18 in response to the force acting on the harness retainer 10 from the child 11 as the left and right harness belts 17, 19 are tightened. In one example, movement of the retractable protrusions(s) 26 may occur once a bias force, such as may be provided by a spring or other suitable alternative, is exceeded by force acting on the retractable protrusions from the child, the harness belts, or a combination thereof. The first visual representation 28 is displayed, and the second visual representation 30 is not displayed, when the force acting on the harness retainer 10 is below the predetermined amount. The second visual representation 30 is displayed, and the first visual representation is not displayed, when the force has reached the predetermined amount to indicate when the harness 14 has proper tension on the child 11.

In some embodiments, a third visual representation 32 may be displayed, and the first and second visual representations 28, 30 not displayed, if the force acting on the harness retainer 10 exceeds a second predetermined amount Y greater than the predetermined amount X to indicate if harness tension on the child 11 is too high. In this case, the indicator 24 is configured to indicate an acceptable range of tensile load in the harness 14 or pressure on the child 11 from the harness 14 and/or harness retainer 10.

The first visual representation 28 can include one or more of a first color, icon, text, symbol, etc. and the second visual representation can include one or more of a second color, icon, text, symbol, etc. different than the first color, icon, text, symbol, etc. The third visual representation can include the same color, icon, text, symbol, etc. as the first visual representation or a different color, icon, text, symbol, etc. from the first and second color, icon, text, symbol, etc.

In some embodiments, the indicator 24 is configured to indicate when the left and right belt mounts 16, 18 are locked together by the lock 20. In some embodiments, the indicator 24 is configured to indicate when: (i) the left and right belt mounts 16, 18 are locked together by the lock 20, and/or (ii) a force acting on the harness retainer 10 is above a predetermined amount or within a predetermined range.

The child restraint 12 further includes a seat shell 13 configured to hold the child. The harness 14 is attached to the seat shell 13 and is configured to restrain the child to the seat shell 13. In the illustrative embodiment, the harness retainer 10 is a chest clip configured to tie left and right shoulder/chest straps 17, 19 together along a chest or torso region of the child. While only the first belt mount 16 is shown as including the indicator 24, it should be noted that each belt mount 16, 18 can include a respective indicator 24 to indicate when each respective strap 17, 19 reaches sufficient tension.

In illustrative embodiments, the indicator 24 includes an indicator panel 40 including the first indication 28 and the second indication 30 and a panel actuator 42 configured to move the indicator panel 40 relative to the first belt mount 18 between an unloaded configuration and a loaded configuration. The panel actuator 42 normally assumes the unloaded configuration when the force acting on the harness retainer 10 is below the predetermined amount. As a result, the indicator panel 40 normally produces the first indication 28 in the unloaded configuration. In other words, the indicator panel normally assumes a first indication position and displays the first indication 28 to a user while the second indication 30 is not displayed to a user. The panel actuator 42 is configured to move to the loaded configuration in response to the force on the harness retainer 10 meeting or exceeding the predetermined amount. In response to the panel actuator 42 assuming the loaded configuration, the indicator panel 40 produces the second indication 30. In other words, the indicator panel 40 is moved to a second indication position in the loaded configuration to display the second indication 30 to a user while the first indication 28 is not displayed.

The panel actuator 42 includes the retractable protrusion 26 and a bias member 27. The retractable protrusion 26 is configured to engage the first harness belt 17 or the child and is configured to move from the unloaded configuration to the loaded configuration in response to the force acting on the retractable protrusion 26 reaching the predetermined amount. The bias member 27 is configured to urge the indicator panel 40 to the first indication position so that the indicator 24 normally assumes the unloaded configuration.

One or both of the first belt mount and the second belt mount 16, 18 is formed to include an interior space 44. The retractable protrusion 26 is arranged to lie at least partially within the interior space 44 and is configured to extend through an opening 48 formed in the first belt mount 16 or the second belt mount 18 and outside of the interior space 44 in the unloaded configuration. The retractable protrusion 26 withdrawals at least partially into the interior space 44 in the loaded configuration to cause the indicator panel 40 to translate relative to the belt mount 16 so that the second indication 30 is aligned with and displayed through the opening 46.

In the illustrative embodiment, the retractable protrusion 26 is aligned with a looped portion 17' of the harness strap 17 routed through the harness retainer 10 as shown in Figs. 4 and 6. As such, the retractable protrusion 26 may be engaged an moved by the looped section 17' of the harness strap 17 which interfaces with a portion of the child, such as the child's chest or abdomen. In such an arrangement, the looped section 17' of the harness strap 17 is positioned between the retractable protrusion 26 and the child so that the retractable protrusion does not cause discomfort for the child. The bias member 27 may provide sufficient force to create or enlarge the looped section of the harness strap 17 absent force sufficient to overcome the bias member 27. Such force sufficient to overcome the bias member 27 may be the predetermined amount by which the indicator 24 changes from the unloaded configuration to the loaded configuration.

The looped section 17' resides between a first strap slot 60 formed in the harness retainer 10 and a second strap slot 62 formed in the harness retainer 10 and passes beneath the retractable protrusion 26. The looped section 17' of the harness strap 17 may have a first length between a first strap slot 60 and the second strap slot 62 when the harness strap 17 is loose and a second length, less than the first length, when the harness strap 17 is tightened to the predetermined amount. When the harness strap 17 is tightened, the looped section 17 is pulled into engagement with the retractable protrusion 26. If tension in the harness strap 17 is sufficiently large, the looped section 17' causes the retractable protrusion 26 to move from an extended position establishing the unloaded configuration to a retracted position establishing the loaded configuration. In some embodiments, the retractable protrusion 26 can be positioned to engage with a portion of the child when the harness 14 is tightened such that pressure acting on the retractable protrusion 26 from the portion of the child causes the retractable protrusion 26 to change from the extended position to the retracted position when the pressure reaches the predetermined amount.

The indicator panel 40 includes a panel body 49 having the first indication 28 and the second indication 30 and a panel ramp 50 coupled to the panel body 49 as shown in Figs. 7 and 8. The panel ramp 50 is configured to engage the retractable protrusion 26 along a slip surface of the panel ramp 50. Movement of the retractable protrusion 26 in a first direction from the unloaded configuration to the loaded configuration causes movement of the indicator panel 40 in a second direction different than the first direction. In other words, the indicator panel 40 is configured to translate relative to the belt mount 16 as the retractable protrusion 26 changes from the extended position to the retracted position by pushing the indicator panel 40 as the retractable protrusion 26 rides along the panel ramp 50. The bias member 27 is illustratively a compression spring engaged with the panel ramp 50.

Another embodiment of an installation indicator 224 that can be used with a harness retainer 210 included in the child restraint is shown in Figs. 9 and 10. The installation indicator 224 is similar to installation indicator 24. Accordingly, similar reference numbers in the 200 series are used to indicate similar features between indicator 224 and indicator 24. The disclosure of indicator 24 is hereby incorporated by reference for indicator 224 except for differences between indicator 24 and indicator 224 discussed below.

The indicator 224 includes an indicator panel 240 including a first indication 228 and a second indication 230 and a panel actuator 242 configured to move the indicator panel 240 relative to the first belt mount 16 between an unloaded configuration displaying the first indication 228 and a loaded configuration displaying the second indication 230. The panel actuator 242 normally assumes the unloaded configuration when the force acting on the harness retainer 210 is below the predetermined amount. As a result, the indicator panel 240 normally produces the first indication 228 in the unloaded configuration. In other words, the indicator panel normally assumes a first indication position and displays the first indication 228 to a user while the second indication 230 is not displayed to a user. The panel actuator 242 is configured to move to the loaded configuration in response to the force on the harness retainer 10 meeting or exceeding the predetermined amount. In response to the panel actuator 242 assuming the loaded configuration, the indicator panel 240 produces the second indication 230. In other words, the indicator panel 240 is moved to a second indication position in the loaded configuration to display the second indication 230 to a user while the first indication 228 is not displayed.

The panel actuator 242 includes the retractable protrusion 226 and a bias member 227. The retractable protrusion 226 is configured to engage the first harness belt 17 or the child and is configured to move from the unloaded configuration to the loaded configuration in response to the force acting on the retractable protrusion 226 reaching the predetermined amount. The bias member 227 is configured to urge the indicator panel 240 to the first indication position so that the indicator 224 normally assumes the unloaded configuration.

The retractable protrusion 226 is arranged to lie at least partially within an interior space 244 of the first belt mount 216 and is configured to extend through an opening 248 formed in the first belt mount 216 and outside of the interior space 244 in the unloaded configuration. The retractable protrusion 226 withdrawals at least partially into the interior space 244 in the loaded configuration to cause the indicator panel 240 to translate relative to the belt mount 216 so that the second indication 230 is aligned with and displayed through the opening 246.

The retractable protrusion 226 is formed integrally with the indicator panel 240 for movement therewith. The indicator panel 240 and the retractable protrusion 226 are configured to pivot relative to the belt mount 216 about a pivot axis 250 between the unloaded configuration and the loaded configuration. The bias member 227 is illustratively a torsion spring configured to rotate the indicator panel 240 and the retractable protrusion 226 about the axis 250.

Another embodiment of an installation indicator 324 that can be used with a harness retainer 310 included in the child restraint is shown in Fig. 11. The installation indicator 324 is similar to installation indicator 24. Accordingly, similar reference numbers in the 300 series are used to indicate similar features between indicator 324 and indicator 24. The disclosure of indicator 24 is hereby incorporated by reference for indicator 324 except for differences between indicator 24 and indicator 324 discussed below.

The indicator 324 can produce an audible indication (i.e. a, click, snap, beep, or alarm) and/or a tactile indication (i.e. a vibration) in response to the force reaching the predetermined amount(s). Such other sensory effect can be made alone, with the visual representations, or in any combination. In one example, the indicator 324 may also provide a signal or input to a remote device, such as a smart phone or a console in a vehicle, which can then issue an alert to the user from the remote device. Accordingly, the harness retainer 310 may further include suitable circuitry for sensing the force F and communicating with a remote device, such as one or more sensors or switches, one or more processors, one or more memory storage devices, and/or wireless communication circuitry (i.e. a transceiver, transmitter, receiver, and/or antenna). In some embodiments, the remote device itself can produce a sensory effect in response to the signal or input from the indicator 324. An indication is produced when one or more sensory effects is conveyed to a user which can be seen, felt, and/or heard.

The indicator 324 includes a sensor 326, a sensory device 327, a processor 342, and a memory storage device 340. The sensor 326 is configured to sense the force acting on the harness retainer 310 and output a signal when the force acting on the harness retainer 310 is at or above the predetermined amount. The sensory device 327 is configured to produce one or more indications 328, 330, 332 in response to the signals from the sensor, or lack thereof. The processor 342 is configured to control operation of the sensory device 327 in response to the signals from the sensor 326. The memory storage device 340 stores or includes instructions that, when executed by the processor 342, cause the processor 342 to output one or more commands to cause the sensory device 327 to produce an indication in response to the signal(s) from the sensor 326. The sensor 326 can include any suitable force-sensitive device such as a pressure sensor, a stress sensor, a strain sensor, or a switch (i.e. by using a retractable protrusion 26, 226 to complete a circuit within the harness retainer 310 when moved relative to the belt mount). An indication is produced when one or more sensory effects is conveyed to a user.

In one example, the sensory device 327 includes a speaker and is configured to produce one or more indications 328, 330, 330 in the form of an audible alert. For example, the speaker can produce a first tone or message when forces acting on the harness retainer 310 are below the predetermined amount and a second tone or message when forces acting on the harness retainer 310 reach the predetermined amount. In some embodiments, the speaker may only produce a second indication 330 to indicate when the forces acting on the harness retainer 310 have reached the predetermined amount indicative of a tightened state of the harness 14 and/or a third indication 332 when forces acting on the harness retainer 310 have exceeded a second predetermined amount indicative of an overloaded configuration of the child harness. In another example, the sensory device 327 includes a remote device separate from the harness retainer 310 and the indicator 324 includes communication circuitry 346 (e.g. one or more transceivers, transmitters, receivers, and/or antennas.) that can send and/or receive signals and/or data between the electronics in the harness retainer 310 and the remote device. In yet another example, the sensory device 327 includes one or more of an indicator panel (i.e. indicator panel 40, 240), a speaker, and/or a remote device. The harness retainer 310 also includes a power supply, such as a battery, to power all on-board electronics in the harness retainer 310.

The following numbered clauses include embodiments that are contemplated and non-limiting:
Clause 1. A child restraint includes a seat shell formed to include a child-receiving space configured to receive a child therein.
Clause 2. The child restraint of clause 1, any other suitable clause, or any suitable combination of clauses, including a child harness coupled to the seat shell and including a first harness strap and a second harness strap configured to secure the child to the seat shell within the child-receiving space.
Clause 3. The child restraint of clause 2, any other suitable clause, or any suitable combination of clauses, including a chest clip coupled to the first harness strap and the second harness strap and configured to guide attachment of the child harness to the child to block separation of the child harness from the child.
Clause 4. The child restraint of clause 3, any other suitable clause, or any suitable combination of clauses, wherein the chest clip includes a first belt mount coupled to the first harness strap, a second belt mount coupled to the second harness strap and configured to engage selectively with the first belt mount to block movement of at least a portion of the first strap away from the second strap, and an indicator coupled to the first belt mount and configured to produce a first indication in an unloaded configuration when a force acting on the chest clip is less than a predetermined amount and a second indication in a loaded configuration when the force acting on the chest clip is at or greater than the predetermined amount.
Clause 5. The child restraint of clause 4, any other suitable clause, or any suitable combination of clauses, wherein the first indication includes a first visual representation aligned with an opening formed in the first belt mount in the unloaded configuration and the second indication includes a second visual representation aligned with the opening formed in the first belt mount in the loaded configuration.
Clause 6. The child restraint of clause 5, any other suitable clause, or any suitable combination of clauses, wherein the indicator is configured to produce a third indication in an overloaded configuration when the force acting on the chest clip is at or above a second predetermined amount greater than the predetermined amount.
Clause 7. The child restraint of clause 4, any other suitable clause, or any suitable combination of clauses, wherein the indicator includes an indicator panel including the first indication and the second indication and a panel actuator configured to move the indicator panel relative to the first belt mount between the unloaded configuration and the loaded configuration.
Clause 8. The child restraint of clause 7, any other suitable clause, or any suitable combination of clauses, wherein the panel actuator includes a retractable protrusion configured to engage the first harness belt or the child and configured to move from the unloaded configuration to the loaded configuration in response to the force reaching the predetermined amount and a biasing member configured to urge the indicator panel and the retractable protrusion to the unloaded configuration when the force is less than the predetermined amount.
Clause 9. The child restraint of clause 7, any other suitable clause, or any suitable combination of clauses, wherein first belt mount is formed to include an interior space and the retractable protrusion is configured to extend through an opening formed in the first belt mount and outside of the interior space in the unloaded configuration and withdrawals at least partially into the interior space in the loaded configuration.
Clause 10. The child restraint of clause 9, any other suitable clause, or any suitable combination of clauses, wherein the indicator panel includes a panel body having the first indication and the second indication and a panel ramp configured to engage the retractable protrusion along a slip surface of the panel ramp, and wherein movement of the retractable protrusion in a first direction from the unloaded configuration to the loaded configuration causes movement of the indicator panel in a second direction different than the first direction.
Clause 11. The child restraint of clause 9, any other suitable clause, or any suitable combination of clauses, wherein the retractable protrusion formed integrally with the indicator panel and the indicator panel and the retractable protrusion are configured to pivot about a pivot axis between the unloaded configuration and the loaded configuration.
Clause 12. The child restraint of clause 4, any other suitable clause, or any suitable combination of clauses, wherein the indicator is further configured to indicate when the left and right belt mounts are locked together.
Clause 13. The child restraint of clause 4, any other suitable clause, or any suitable combination of clauses, wherein the indicator includes a sensor configured to sense the force acting on the chest clip and output a signal when the force acting on the chest clip is at or above the predetermined amount, a speaker configured to produce the second indication in the form of an audible alert, a processor configured to receive the signal from the sensor, and a memory storage device storing instructions that, when executed by the processor, cause the processor to output a command to cause the speaker to produce the second indication in response to the signal from the sensor.
Clause 14. The child restraint of clause 13, any other suitable clause, or any suitable combination of clauses, wherein the sensor is configured to output a second signal when the force acting on the chest clip is at or above a second predetermined amount, greater than the first predetermined amount, and the memory storage device includes instructions that, when executed by the processor, cause the processor to output a second command to cause the speaker to produce a third audible indication in response to the second signal from the sensor, the third audible indication being indicative of an overloaded configuration of the child harness.
Clause 15. A harness retainer coupled to a first harness strap and a second harness strap.
Clause 16. The child restraint of clause 15, any other suitable clause, or any suitable combination of clauses, wherein the harness retainer includes a first belt mount coupled to the first harness strap, a second belt mount coupled to the second harness strap and configured to engage selectively with the first belt mount to block movement of at least a portion of the first strap away from the second strap, and an indicator coupled to at least one of the first belt mount and the second belt mount and configured to produce a first indication to indicate a first installation status of the harness retainer and a second indication to indicate a second installation status of the harness retainer different from the first installation status.
Clause 17. The child restraint of clause 16, any other suitable clause, or any suitable combination of clauses, wherein the first indication is produced when a force acting on the harness retainer is less than a predetermined amount and the second indication is produced when the force acting on the harness retainer is at or greater than the predetermined amount.
Clause 18. The child restraint of clause 16, any other suitable clause, or any suitable combination of clauses, wherein the indicator is configured to produce the second installation status when the left and right belt mounts are locked together.
Clause 19. The child restraint of clause 16, any other suitable clause, or any suitable combination of clauses, wherein the indicator is configured to produce the second installation status when both: (i) the left and right belt mounts are locked together, and (ii) a force acting on the harness retainer is at or above a predetermined amount or within a predetermined range.
Clause 20. The child restraint of clause 16, any other suitable clause, or any suitable combination of clauses, wherein the indicator includes an indicator panel including the first indication and the second indication and a panel actuator including a retractable protrusion configured to engage the first harness belt or the child and configured to move from the unloaded configuration to the loaded configuration in response to the force reaching the predetermined amount and a biasing member configured to urge the indicator panel and the retractable protrusion to the unloaded configuration when the force is less than the predetermined amount.
Clause 21. The child restraint of clause 20, any other suitable clause, or any suitable combination of clauses, wherein first belt mount is formed to include an interior space and the retractable protrusion is configured to extend through an opening formed in the first belt mount and outside of the interior space in the unloaded configuration to withdrawal the retractable protrusion at least partially into the interior space in the loaded configuration.
Clause 22. The child restraint of clause 21, any other suitable clause, or any suitable combination of clauses, wherein the retractable protrusion formed integrally with the indicator panel and the indicator panel and the retractable protrusion are configured to pivot about a pivot axis between the unloaded configuration and the loaded configuration.
Clause 23. The child restraint of clause 20, any other suitable clause, or any suitable combination of clauses, wherein the indicator panel includes a panel body having the first indication and the second indication and a panel ramp configured to engage the retractable protrusion along a slip surface of the panel ramp, and wherein movement of the retractable protrusion in a first direction from the unloaded configuration to the loaded configuration causes movement of the indicator panel in a second direction different than the first direction.
Clause 24. The child restraint of clause 18, any other suitable clause, or any suitable combination of clauses, wherein the indicator includes a sensor configured to output a signal indicative of the first installation status or the second installation status, a processor configured to receive the signal from the sensor, and a memory storage device storing instructions that, when executed by the processor, output a command to cause the indicator to produce the first indication or the second indication in response to the signal from the sensor.

### List of reference signs

- 10: harness retainer
- 11: child
- 12: child restraint
- 13: seat shell
- 14: harness
- 16: left belt mount
- 17: harness belt
- 17: harness strap
- 17': looped portion
- 18: right belt mount
- 19: harness belt
- 19: harness strap
- 20: lock
- 22: lock release
- 24: indicator
- 26: protrusion
- 27: bias member
- 28: first visual representation
- 28: first indication
- 30: second visual representation
- 30: second indication
- 32: third visual representation
- 40: indicator panel
- 42: panel actuator
- 44: interior space
- 46: opening
- 48: opening
- 49: panel body
- 50: panel ramp
- 60: first strap slot
- 62: second strap slot
- 210: harness retainer
- 216: first belt mount
- 224: installation indicator
- 226: protrusion
- 227: bias member
- 228: first indication
- 230: second indication
- 240: indicator panel
- 242: panel actuator
- 244: interior space
- 246: opening
- 248: opening
- 250: pivot axis
- 310: harness retainer
- 324: installation indicator
- 326: sensor
- 327: sensory device
- 328: first indication
- 330: second indication
- 332: third indication
- 340: memory storage device
- 342: processor
- 346: communication circuitry
- F: force
- X: predetermined amount
- Y: second predetermined amount

## Claims

1. A child restraint (12) comprising
a seat shell (13) formed to include a child-receiving space configured to receive a child (11) therein,
a child harness (14) coupled to the seat shell (13) and including a first harness strap (17) and a second harness strap (19) configured to secure the child (11) to the seat shell (13) within the child-receiving space, and
a harness retainer (10) coupled to the first harness strap (19) and the second harness strap (19),
wherein the harness retainer (10) includes a first belt mount (16) coupled to the first harness strap (17), a second belt mount (18) coupled to the second harness strap (19) and configured to engage selectively with the first belt mount (16) to block movement of at least a portion of the first strap (17) away from the second strap (19), and an indicator (24, 224, 324) coupled to at least one of the first belt mount (16) and the second belt mount (18) and configured to produce a first indication (28, 228, 328) to indicate a first installation status of the harness retainer (10) and a second indication (30, 230, 330) to indicate a second installation status of the harness retainer (10) different from the first installation status.

2. The child restraint (12) according to claim 1, wherein the first indication (28, 228, 328) is produced when a force (F) acting on the harness retainer (10) is less than a predetermined amount (X) and the second indication (30, 230, 330) is produced when the force (F) acting on the harness retainer (10) is at or greater than the predetermined amount (X).

3. The child restraint (12) according to claim 1 or 2, wherein the indicator (24, 224, 324) is configured to produce the second installation status when the left and right belt mounts (16, 18) are locked together.

4. The child restraint (12) according to claim, 2 or 3, wherein the indicator (24, 224, 324) is configured to produce the second installation status when both:
(i) the left and right belt mounts (16, 18) are locked together, and (ii) a force (F) acting on the harness retainer (10) is at or above a predetermined amount (X) or within a predetermined range.

5. The child restraint (12) according to one of the preceeding claims, wherein the indicator (24, 224, 324) includes an indicator panel (40, 240) including the first indication (28, 228, 328) and the second indication (30, 230, 330) and a panel actuator (40, 242) including a retractable protrusion (26) configured to engage the first harness belt (17) or the child (11) and configured to move from the unloaded configuration to the loaded configuration in response to the force (F) reaching the predetermined amount (X) and a biasing member (27) configured to urge the indicator panel (40, 240) and the retractable protrusion (26) to the unloaded configuration when the force (F) is less than the predetermined amount (X).

6. The child restraint (12) according to one of the preceeding claims, wherein first belt mount (16) is formed to include an interior space and the retractable protrusion (26) is configured to extend through an opening (46, 246, 48, 248) formed in the first belt mount (16) and outside of the interior space in the unloaded configuration to withdrawal the retractable protrusion (26) at least partially into the interior space in the loaded configuration.

7. The child restraint (12) according to claim 5 or 6, wherein the retractable protrusion (26) formed integrally with the indicator panel (40, 240) and the indicator panel (40, 240) and the retractable protrusion (26) are configured to pivot about a pivot axis (250) between the unloaded configuration and the loaded configuration.

8. The child restraint (12) according to claim 5, 6 or 7, wherein the indicator panel (40, 240) includes a panel body (49) having the first indication (28, 228, 328) and the second indication (30, 230, 330) and a panel ramp (50) configured to engage the retractable protrusion (26) along a slip surface of the panel ramp (50), and wherein movement of the retractable protrusion (26) in a first direction from the unloaded configuration to the loaded configuration causes movement of the indicator panel (40, 240) in a second direction different than the first direction.

9. The child restraint (12) according to one of the preceeding claims, wherein the indicator (24, 224, 324) includes a sensor (326) configured to output a signal indicative of the first installation status or the second installation status, a processor (342) configured to receive the signal from the sensor (326), and a memory storage device (340) storing instructions that, when executed by the processor (342), output a command to cause the indicator (24, 224, 324) to produce the first indication (28, 228, 328) or the second indication (30, 230, 330) in response to the signal from the sensor (326).

10. A child restraint (12) comprising
a seat shell (13) formed to include a child-receiving space configured to receive a child (11) therein,
a child harness (14) coupled to the seat shell (13) and including a first harness strap (17) and a second harness strap (19) configured to secure the child (11) to the seat shell (13) within the child-receiving space, and
a chest clip coupled to the first harness strap (17) and the second harness strap (19) and configured to guide attachment of the child harness (14) to the child (11) to block separation of the child harness (14) from the child (11),
wherein the chest clip includes a first belt mount (16) coupled to the first harness strap (17), a second belt mount (18) coupled to the second harness strap (19) and configured to engage selectively with the first belt mount (18) to block movement of at least a portion of the first strap (17) away from the second strap (19), and an indicator (24, 224, 324) coupled to the first belt mount (16) and configured to produce a first indication (28, 228, 328) in an unloaded configuration when a force (F) acting on the chest clip is less than a predetermined amount (X) and a second indication (30, 230, 330) in a loaded configuration when the force (F) acting on the chest clip is at or greater than the predetermined amount (X).

11. The child restraint (12) according to one of the preceeding claims, wherein the first indication (28, 228, 328) includes a first visual representation (28) aligned with an opening (46, 246, 48, 248) formed in the first belt mount (16) in the unloaded configuration and the second indication (30, 230, 330) includes a second visual representation (30) aligned with the opening (46, 246, 48, 248) formed in the first belt mount (16) in the loaded configuration.

12. The child restraint (12) according to claim 10 or 11, wherein the indicator (24, 224, 324) is configured to produce a third indication (32) in an overloaded configuration when the force (F) acting on the chest clip is at or above a second predetermined amount (Y) greater than the predetermined amount (X).

13. The child restraint (12) according to one of the preceeding claims, wherein the indicator (24, 224, 324) includes an indicator panel (40, 240) including the first indication (28, 228, 328)) and the second indication (30, 230, 330) and a panel actuator (40, 242) configured to move the indicator panel (40, 240) relative to the first belt mount (16) between the unloaded configuration and the loaded configuration.

14. The child restraint (12) according to claim 13, wherein the panel actuator (40, 242) includes a retractable protrusion (26) configured to engage the first harness belt 17) or the child (11) and configured to move from the unloaded configuration to the loaded configuration in response to the force (F) reaching the predetermined amount (X) and a biasing member (27) configured to urge the indicator panel (40, 240) and the retractable protrusion (26) to the unloaded configuration when the force (F) is less than the predetermined amount (X).

15. The child restraint (12) according to one of the preceeding claims, wherein first belt mount (16) is formed to include an interior space and the retractable protrusion (26) is configured to extend through an opening (46, 246, 48, 248) formed in the first belt mount (16) and outside of the interior space in the unloaded configuration and withdrawals at least partially into the interior space in the loaded configuration.

16. The child restraint (12) according to one of the preceeding claims, wherein the indicator panel (40, 240) includes a panel body (49) having the first indication (28, 228, 328) and the second indication (30, 230, 330) and a panel ramp (50) configured to engage the retractable protrusion (26) along a slip surface of the panel ramp (50), and wherein movement of the retractable protrusion (26) in a first direction from the unloaded configuration to the loaded configuration causes movement of the indicator panel (40, 240) in a second direction different than the first direction.

17. The child restraint (12) according to one of the preceeding claims, wherein the retractable protrusion (26) formed integrally with the indicator panel (40, 240) and the indicator panel (40, 240) and the retractable protrusion (26) are configured to pivot about a pivot axis (250) between the unloaded configuration and the loaded configuration.

18. The child restraint (12) according to one of the preceeding claims, wherein the indicator (24, 224, 324) is further configured to indicate when the left and right belt mounts (16,18) are locked together.

19. The child restraint (12) according to one of the preceeding claims 10-18, wherein the indicator (24, 224, 324) includes a sensor (326) configured to sense the force (F) acting on the chest clip and output a signal when the force (F) acting on the chest clip is at or above the predetermined amount (X), a speaker configured to produce the second indication (30, 230, 330) (in the form of an audible alert, a processor (342) configured to receive the signal from the sensor (326), and a memory storage device (340) storing instructions that, when executed by the processor (342), cause the processor (342) to output a command to cause the speaker to produce the second indication (30, 230, 330) in response to the signal from the sensor (326).

20. The child restraint (12) according to claim 19, wherein the sensor (326) is configured to output a second signal when the force (F) acting on the chest clip is at or above a second predetermined amount (Y), greater than the first predetermined amount (X), and the memory storage device (340) includes instructions that, when executed by the processor (342), cause the processor (342) to output a second command to cause the speaker to produce a third audible indication (332) in response to the second signal from the sensor (326), the third audible indication (332) being indicative of an overloaded configuration of the child harness (14).
